# EUROPÄISCHE PATENTSCHRIFT

(11) **EP 0 574 836 B1**
(45) Veröffentlichungstag und Bekanntmachung des Hinweises auf die Patenterteilung: **08.05.1996**
(21) Anmeldenummer: 93109341.3
(22) Anmeldetag: 11.06.1993
(51) Int. Cl.: H01J 9/44, H04N 17/04

(54) **Vorrichtung und Verfahren zur Landungsmessung bei Farbbildröhren**
Device and method of measuring electron beam landing in colour cathode ray tubes
Dispositif et procédé pour déterminer l'atterrisage du faisceau d'électron dans un tube à rayons cathodique

(30) Priorität: 16.06.1992 DE 4219646
(43) Veröffentlichungstag der Anmeldung: 22.12.1993
(73) Patentinhaber: NOKIA TECHNOLOGY GmbH, D-75175 Pforzheim (DE)
(72) Erfinder: Hassler, Joachim, D-7300 Esslingen (DE); Sernhorst, Zeljko, D-3100 Celle (DE); Ringer, Kurt, D-2803 Weyhe (DE)

(56) Entgegenhaltungen:
- US-A- 4 286 164
- US-A- 4 602 272
- PROC.IEEE INT.CONF.ROBOTICS & AUTOMATION 14. Mai 1992, NICE, FRANCE Seiten 993 - 998 , XP299852 Z BIEN ET AL. 'Development of an automatic adjustment system for integrated tube components'
- DISPLAYS Bd. 7, Nr. 1, Januar 1986, GUILDFORD GB Seiten 17 - 29 P KELLER 'Resolution measurement techniques for data display cathode ray tubes'

## Beschreibung

### Technisches Gebiet

Das Folgende betrifft ein Verfahren und eine Vorrichtung zum Messen der Landung eines Elektronenstrahls, der in einer Mehrstrahl-Farbbildröhre durch einen Schlitz in einer Schattenmaske auf einen Leuchtstoffstreifen auf den Bildschirm der Röhre trifft.

Sinnverwandt mit dem Begriff der "Landung" ist der Begriff der "Farbreinheit". Als Landungsfehler wird typischerweise die Abweichung zwischen der Mitte des Leuchtstoffstreifens in Bildschirmmitte und der Mitte des Elektronenflecks verstanden, wie er dadurch erzeugt wird, daß ein Elektronenstrahl durch den diesem Leuchtstoffstreifen zugeordneten Schlitz in der Schattenmaske tritt. Wenn der Landungsfehler immer größer wird, rückt ein Außenrand des Elektronenflecks immer näher zum benachbarten Leuchtstoffstreifen hin und erreicht diesen schließlich bei starkem Landungsfehler. Dies führt dazu, daß der Elektronenstrahl zwei benachbarte Leuchtstoffstreifen zum Leuchten anregt. Diese weisen jedoch unterschiedliche Farbe auf. Ein großer Landungsfehler führt somit zu einem Farbreinheitsfehler.

### Stand der Technik

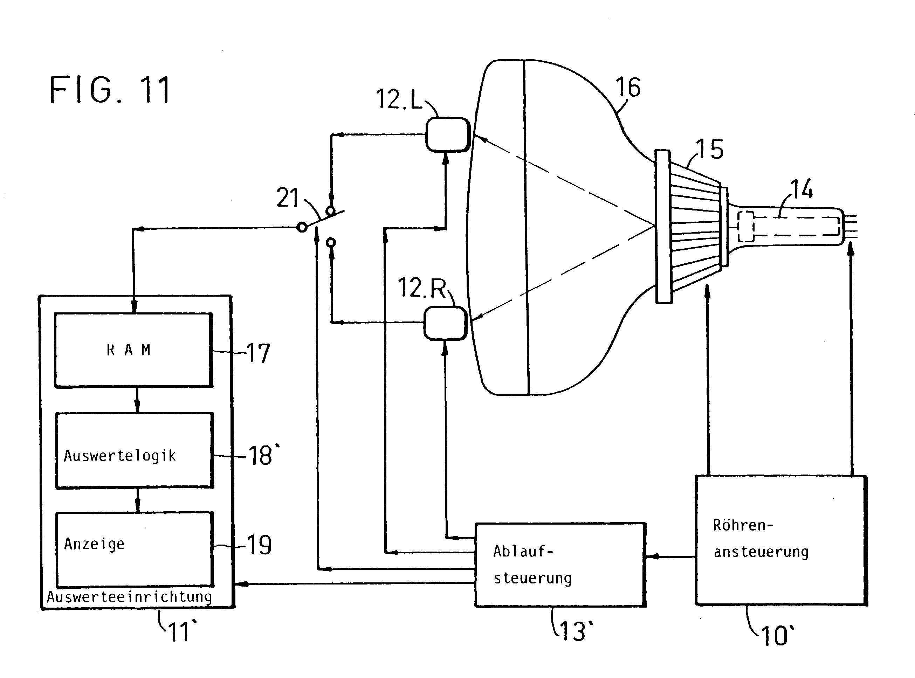

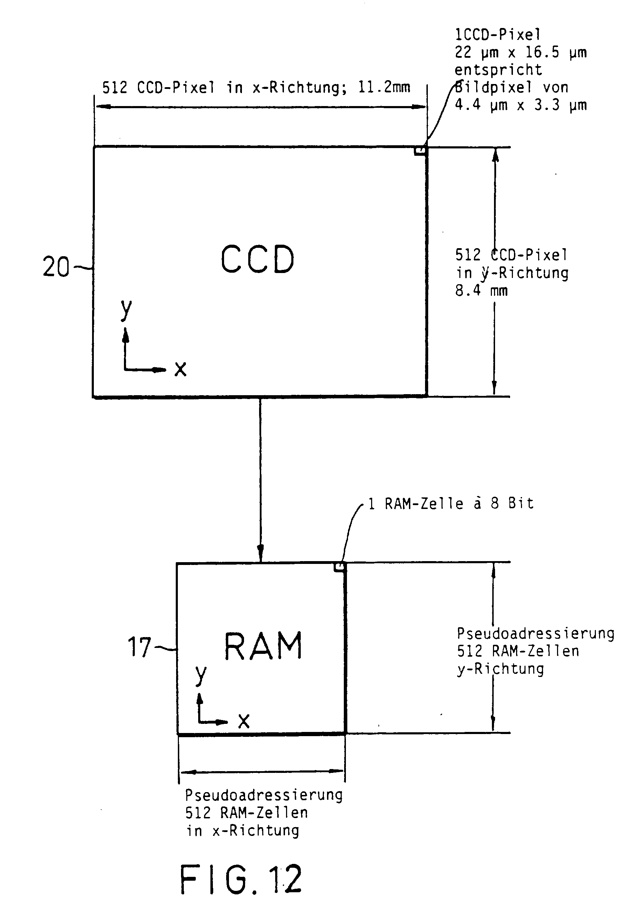

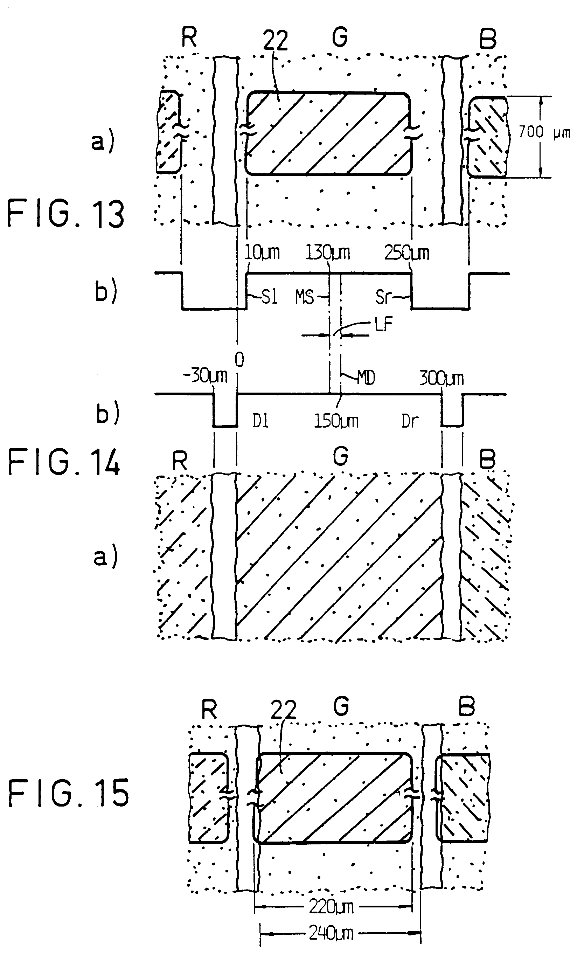

Die Fig. 11 und 12 veranschaulichen eine Vorrichtung zur Landungsmessung, wie sie seit einigen Jahren von der Firma Innovationstechnik Gesellschaft für Automation m.b.H., Bremen, DE, angeboten wird. Mit Hilfe der Fig. 13 und 14 wird ein Verfahren erläutert, das mit dieser Vorrichtung ausführbar ist.

Zur Vorrichtung gehören eine Röhrenansteuerung 10', eine Auswerteeinrichtung 11', eine rechte Bildwandlerkamera 12.R, eine linke Bildwandlerkamera 12.L sowie eine Ablaufsteuerung 13', die den zeitlichen Betriebsablauf der zuvor genannten Baugruppen steuert. Die Röhrenansteuerung 10' steuert das Elektronenstrahlerzeugungssystem 14 und den Ablenker 15 einer Farbbildröhre 16 an. Die Auswerteeinrichtung 11' verfügt über einen RAM 17, eine Auswertelogik 18' und eine Anzeige 19. In jeder der beiden Bildwandlerkameras 12.R und 12.L ist jeweils ein CCD-Bildwandler 20 (siehe Fig. 12) angeordnet. Zwischen den beiden Bildwandlerkameras wird mit Hilfe eines Umschalters 21 umgeschaltet, der von der Ablaufsteuerung 13' betätigt wird.

Daten zum CCD-Bildwandler 20 sind in Fig. 12 eingetragen. Die Ladungen aus den CCD-Pixeln werden mit Hilfe der Ablaufsteuerung 13' in den RAM 17 eingelesen. Dieser RAM verfügt über 10¹⁸ Zellen (entsprechend den 10¹⁸ CCD-Pixeln) a 8 Bit (256 kByte). Der Anschaulichkeit halber wird in Fig. 12 von einer Pseudoadressierung von jeweils 512 RAM-Zellen in x- und y-Richtung ausgegangen, entsprechend der Anzahl und Anordnung der CCD-Pixel. Diese Darstellung macht unmittelbar erkennbar, daß im RAM Information abgespeichert werden kann, die dem vom CCD aufgenommenen Bild entspricht.

Fig. 13A veranschaulicht schematisch einen Teil eines Bildes, wie es von einem CCD-Bildwandler 20 in einer der Bildwandlerkameras 12.R oder 12.L aufgenommen wird. Fig. 13A zeigt Leuchtflecke 22 innerhalb von Leuchtstoffstreifen R, G und B. Der Bildwandler erkennt jedoch nur leuchtende Gebiete, also die Leuchtflecke 22. Diese Leuchtflecke sind in den in Fig. 11 angedeuteten Lagen der Bildwandlerkameras etwa 240 µm breit, bei einer Breite der Leuchtstoffstreifen von etwa 300 µm. Die Höhe der Leuchtflecke beträgt etwa 700 µm, jedoch sind sie in Fig. 13, wie auch in allen übrigen entsprechenden beigefügten Figuren, mit geringerer Höhe als Breite eingezeichnet. Rot leuchtende Gebiete sind mit gestrichelter, nach rechts oben verlaufender Schraffierung gekennzeichnet, grün leuchtende Gebiete mit durchgezogener Schraffierung und blau leuchtende Gebiete mit gestrichelter, nach links unten verlaufender Schraffierung.

Fig. 14A veranschaulicht den Fall, daß die Gesamtfläche von Leuchtstoffstreifen zum Leuchten angeregt wird. Dies erfolgt entweder mit Hilfe einer äußeren UV-Lichtquelle oder dadurch, daß die vom Elektronenstrahlerzeugungssystem 14 erzeugten Elektronenstrahlen so stark defokussiert werden, daß ein Leuchtstoffstreifen in seiner ganzen Breite ausgeleuchtet wird.

Beim Betreiben der Vorrichtung gemäß den Fig. 11 und 12 wird zunächst das Bild gemäß Fig. 14A vom CCD-Bildwandler 20 aufgenommen und dann in den RAM 17 übertragen. Entlang einer horizontalen Linie der CCD-Information wird dann ausgewertet, wieviel Ladung in den CCD-Pixeln gespeichert war. Die Ladungsmenge entlang der genannten horizontalen Linie ist in Fig. 14B stark vereinfacht dargestellt. Das die Ladungsmenge anzeigende Signal ist in denjenigen Abschnitten, in denen die horizontale Linie Leuchtstoffstreifen schneidet, hoch, während es entlang dem Weg zwischen benachbarten Leuchtstoffstreifen einen niedrigeren Wert aufweist. Da in der Praxis die Ränder der Leuchtstoffstreifen nicht allzu scharf ausgebildet sind, ist der tatsächliche Signalverlauf viel weniger deutlich als derjenige von Fig. 14B. In der Praxis erfolgt daher eine Glättung des Signalverlaufs und eine Differenzierung, gefolgt von einem Schwellenvergleich, um die jeweiligen Kanten zwischen einem leuchtenden und einem nichtleuchtenden Bereich erkennen zu können. In Fig. 14B ist die linke Kante des Leuchtstreifens G mit Dl bezeichnet, während die rechte Kante die Kennzeichnung Dr trägt. Der Ort der linken Kante ist willkürlich auf den Wert Null gesetzt. Die rechte Kante liegt etwa 68 Pixel weiter rechts, was einem Abstand von etwa 300 µm von der linken Kante entspricht. Dies, weil jedes CCD-Pixel von 22 µm Breite ein Bildpixel von 4,4 µm Breite wegen fünffacher Vergrößerung des Bildschirmbildes repräsentiert.

Sobald die Außenkanten des Leuchtstoffstreifens G bestimmt sind, wird das Leuchtfleckbild gemäß Fig. 13A aufgenommen. Es erfolgt eine Auswertung entsprechend der anhand von Fig. 14B erläuterten, wodurch der Signalverlauf gemäß Fig. 13B erhalten wird. Die linke Außenkante Sl des Leuchtflecks 22 auf dem Leuchtstoffstreifen G liegt etwa 10 µm gegenüber dem Ort der linken Leuchtstoffstreifenkante Dl entfernt. Die rechte Leuchtfleckkante Sr liegt bei 250 µm.

Aus den anhand der Fig. 13B und 14B erläuterten Daten ist erkennbar, daß die Mittellinie MS des Leuchtflecks 22 bei etwa 130 µm liegt, während die Mittellinie MD des Leuchtstoffstreifens G bei etwa 150 µm liegt. Die Differenz zwischen diesen beiden Mittellinien entspricht einem Landungsfehler LF von 20 µm.

Das bekannte Verfahren weist somit folgende Merkmale auf:
a) Anregen zumindest desjenigen Leuchtstoffstreifens zu Lumineszenz, auf dem die Landung gemessen werden soll;
b) Aufnehmen des Bildes des leuchtenden Streifens mit einem Bildwandler;
c) Auswerten des im Bildwandler erzeugten elektrischen Ladungsmusters dahingehend, daß festgestellt wird, entlang welcher Kanten relativ zu den Außenrändern des Bildwandlers Übergänge in den Ladungsmengen liegen, wodurch die Außenränder des Leuchtstoffstreifens bestimmt werden;
d) Betreiben der Röhre so, daß der genannte Elektronenstrahl einen Leuchtfleck auf dem genannten Leuchtstoffstreifen erzeugen soll;
e) Aufnehmen des Bildes des tatsächlich erzeugten Leuchtflecks;
f) Auswerten des Bildes des Leuchtflecks, um die Lagen von dessen Außenrändern zu bestimmen; und
h) Vergleichen der Lagen der Außenränder des Leuchtstoffstreifens mit den Lagen der Außenränder des Leuchtflecks, um die Landung des Elektronenstrahls zu bestimmen.

Die bekannte Vorrichtung weist eine Röhrenansteuerung, eine Bildwandlereinrichtung, eine Auswerteeinrichtung und eine Ablaufsteuerung auf, welche Baugruppen so ausgebildet sind, daß das vorstehend genannte Verfahren ausgeübt wird.

Die vorstehend erläuterte Messung setzt voraus, daß die Leuchtflecke 22 ganz auf den zugehörigen Leuchtstoffstreifen liegen. Ist dies nicht der Fall, wie durch Fig. 15 veranschaulicht, kann die Mitte eines Leuchtflecks 22 nicht bestimmt werden, da die Lage einer seiner Außenkanten unbekannt ist. Fig. 15 veranschaulicht den Fall für die Mitte der Röhre, wo gemäß dem dargestellten Beispiel die Leuchtflecke 220 µm und die Leuchtstoffstreifen nur wenig breiter, nämlich 240 µm breit sind. Wegen dieser Abmessungsrelation liegt ein Leuchtfleck schon bei geringem Landungsfehler nicht mehr ganz auf dem zugehörigen Leuchtstoffstreifen. Daher ist die vorstehend beschriebene Vorrichtung für praktische Zwecke nicht für Landungsmessung in der Mitte einer Röhre geeignet. Sie ist auch nicht zur Landungsmessung an Röhren mit größerem Landungsfehler geeignet. Schließlich ist sie völlig ungeeignet für Messungen an Matrixröhren, da bei diesen Röhren die Elektronenflecke grundsätzlich breiter sind als die Leuchtstoffstreifen.

### Darstellung der Erfindungen

Das erfindungsgemäße Verfahren weist die oben aufgelisteten Merkmale a) bis f) und h) auf und ist dadurch gekennzeichnet, daß nach Schritt f) wie folgt weiterverfahren wird:
g) es wird untersucht, ob die Außenränder des Leuchtflecks innerhalb der Außenränder des Leuchtstoffstreifens liegen, und dann,

- wenn diese Bedingung erfüllt ist, wird Schritt h) ausgeführt;
- andernfalls wird mit Hilfe von Strom durch einen Hilfsablenker ein Verschiebe- und Mepablauf ausgeführt, bei dem der den Leuchtfleck erzeugende Elektronenfleck mindestens einmal so verschoben wird, daß seine beiden Außenränder mit Sicherheit erkennbar sind, wobei das jeweilige Leuchtfleckbild aufgenommen und ausgewertet wird, aus welchen Auswertungsdaten die Breite und die Verschiebung des Elektronenflecks und hieraus die ursprünglichen Lagen seiner Außenränder bestimmt werden, woraufhin Schritt h) ausgeführt wird.

Die erfindungsgemäße Vorrichtung unterscheidet sich von der bekannten dadurch, daß zusätzlich ein Hilfsablenker vorhanden ist, mit dessen Hilfe die Landung verändert werden kann, und daß die Ablaufsteuerung und die Auswerteeinrichtung so ausgebildet sind, daß sie den eben genannten Schritt g) ausführen.

Das erfindungsgemäße Verfahren und die erfindungsgemäße Vorrichtung sorgen dafür, daß die Lage einer nicht sichtbaren Elektronenfleckkante mit Hilfe eines Verschiebe- und Meßablaufs für den Elektronenfleck erkannt werden kann, woraus sich dann die Mitte des Elektronenflecks und hieraus wiederum dessen Landung auf dem Leuchtstoffstreifen ermitteln läßt.

Vorzugsweise wird untersucht, ob ein Verschiebeablauf erforderlich ist. Hierzu wird überprüft, ob ein festgestellter Außenrand eines Leuchtflecks mit einem festgestellten Außenrand eines Leuchtstoffstreifens innerhalb der Meßgenauigkeit zusammenfällt. Ist dies der Fall, ist unklar, ob diese beiden Ränder tatsächlich gerade zusammenfallen oder ob der betreffende Rand des Elektronenflecks in einem Bereich liegt, in dem kein Leuchtstoffstreifen vorhanden ist. In diesem Fall wird der Leuchtfleck einmal verschoben. Er ist sogar zweimal zu verschieben, wenn anfänglich keiner der beiden Außenränder des Elektronenflecks mit Sicherheit erkennbar ist. In diesem Fall wird mit Hilfe der zweimaligen Verschiebung die Verschiebeempfindlichkeit kalibriert, und mit Hilfe dieser Empfindlichkeit wird rückgerechnet, wo der Elektronenfleck liegt, wenn kein Strom zur Fleckverschiebung durch den Hilfsablenker geschickt wird.

### Zeichnung

### Zur Erfindung:

Fig. 1: Blockschaltbild einer Farbbildröhre und einer Vorrichtung zur Landungsmessung derselben;
Fig. 2A, B: schematische Diagramme zum Erläutern, wie Landung mit Hilfe eines Hilfsablenkers verwendet werden kann, der entweder in Blickrichtung auf den Bildschirm der Röhre hinter dem Ablenker (Fig. 2A) oder vor diesem (Fig. 2B) angeordnet ist;
Fig. 3A, B, C: schematische Diagramme zum Erläutern eines Leuchtfleckbildes (Fig. 3A), wenn ein Außenrand eines Elektronenflecks nicht auf einen Leuchtstoffstreifen fällt, sowie Signalverläufe für die Leuchtfleckmessung entlang einer Horizontallinie (Fig. 3B) bzw. für eine Leuchtstoffstreifenmessung entlang derselben horizontalen Linie (Fig. 3C);
Fig. 4A, B, C: Darstellungen entsprechend denen von Fig. 3, jedoch für den Fall, daß der Elektronenfleck gemäß Fig. 3 so weit nach links verschoben wurde, daß nun seine beiden Außenränder als Außenränder eines Leuchtflecks erkennbar sind;
Fig. 5A, B, C: Darstellungen entsprechend denen von Fig. 3, jedoch für den Fall, daß an einer Farbbildröhre mit Matrix-streifen keiner der Außenränder eines Elektronenstrahls innerhalb eines Leuchtstoffstreifens liegt;
Fig. 6A, B: Darstellungen entsprechend denen der Fig. 5A, B, jedoch für den Fall, daß der Elektronenfleck gemäß Fig. 5 so weit nach links verschoben ist, daß seine beiden Außenränder in Form der Außenränder eines Leuchtflecks erkennbar sind;
Fig. 7A, B: Darstellungen entsprechend denen der Fig. 5A, B, jedoch für den Fall, daß der Elektronenfleck so weit nach rechts verschoben ist, daß seine beiden Außenränder in Form von Außenrändern eines Leuchtflecks erkennbar sind;
Fig. 8: Übersichtsflußdiagramm zum Erläutern eines Verfahrens, wie es von der Vorrichtung gemäß Fig. 1 ausgeführt wird;
Fig. 9: Flußdiagramm zum Unterprogramm u1 im Ablauf von Fig. 8;
Fig. 10: Flußdiagramm zum Unterprogramm u2 im Flußdiagramm von Fig. 8; und
   zum Stand der Technik:
Fig. 11: Blockschaltbild entsprechend dem von Fig. 1, jedoch für eine im Handel befindliche Vorrichtung;
Fig. 12: schematische Darstellung der Pixelaufteilung in einem CCD-Wandler und der Pseudoadressierung eines RAMs, wie sie in der Vorrichtung gemäß Fig. 1 verwendet werden;
Fig. 13A, B: Darstellungen entsprechend denen der Fig. 3A, B, jedoch für den Fall, daß beide Außenränder eines Elektronenflecks innerhalb eines Leuchtstoffstreifens liegen;
Fig. 14A, B: Darstellungen entsprechend denen von Fig. 13A, B, jedoch für den Fall, daß ein Leuchtstreifen ganz ausgeleuchtet wird, um dessen Außenränder statt diejenigen eines Leuchtflecks zu bestimmen; und
Fig. 15: Darstellung entsprechend der von Fig. 3A.

### Beschreibung von Ausführungsbeispielen

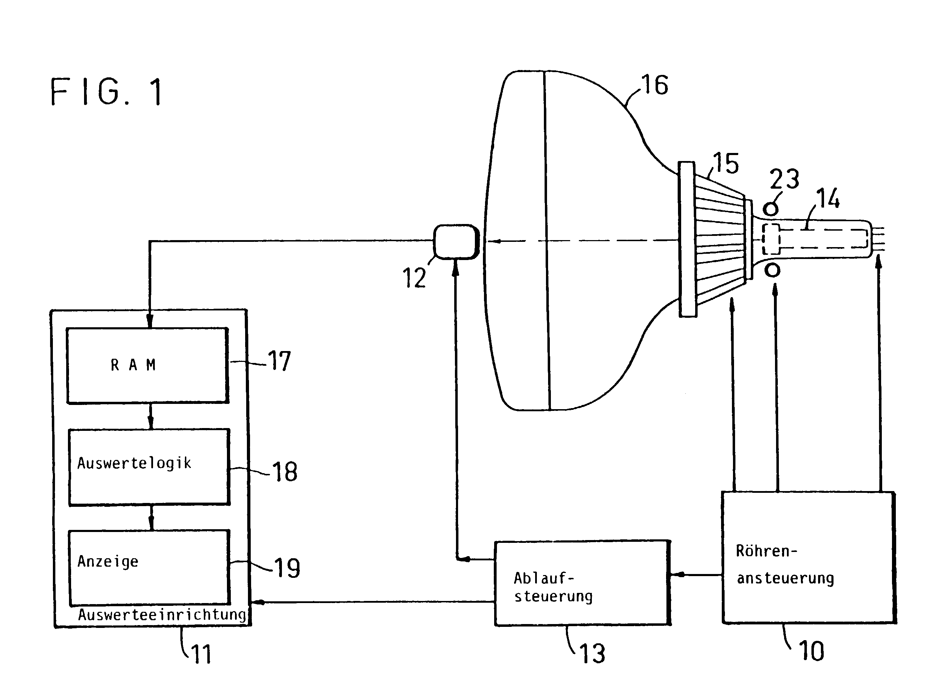

Die erfindungsgemäße Vorrichtung gemäß Fig. 1 ist der im Handel befindlichen Vorrichtung gemäß Fig. 11 sehr ähnlich, weswegen hier nur auf Unterschiede eingegangen wird. Nahe dem vorderen Ende des Elektronenstrahlerzeugungssystems 14 ist ein Hilfsablenker 23 angeordnet. Die Röhrenansteuerung 10 ist nun so ausgebildet, daß sie zusätzlich zum Elektronenstrahlerzeugungssystem 14 und zum Ablenker 15 auch noch den Hilfsablenker 23 ansteuert. In der Auswerteeinrichtung ist die Auswertelogik etwas anders ausgebildet als bei der bekannten Vorrichtung, weswegen statt der Bezugszeichen 11' bzw. 18' die Bezugszeichen 11 bzw. 18 verwendet sind. Wegen geändertem Aufbau weisen außerdem die Ablaufsteuerung nicht mehr das Bezugszeichen 13', sondern 13 auf. Statt zweier Bildwandlerkameras ist nur noch eine einzige Bildwandlerkamera 12 vorhanden, die in der Mitte des Bildschirms der Farbbildröhre 16 angeordnet ist. Diese Darstellung mit der einen Bildwandlerkamera 12 dient zu Veranschaulichung, daß die erfindungsgemäße Vorrichtung und das zugehörige Verfahren auch noch dann anwendbar sind, wenn fast regelmäßig Elektronenflecke nicht vollständig auf dem jeweils zugehörigen Leuchtstoffstreifen landen. Bei praktischer Landungsmessung wird man allerdings häufig doch zwei Bildwandlerkameras 12.R und 12.L verwenden, die, wie in Fig. 11 dargestellt, am Bildschirm angeordnet sind, da in Lagen außerhalb der Bildmitte die Landung bei sich erwärmender Schattenmaske besonders kritisch wird. Es ist daher von Vorteil, die Landung in diesen kritischen Gebieten für eine nachfolgende Röhreneinstellung auszumessen. Unter Nutzung der erfindungsgemäßen Vorrichtung und des erfindungsgemäßen Verfahrens besteht der Vorteil, daß nun alle Röhren ausgemessen werden können, unabhängig von der Größe des Landungsfehlers und unabhängig davon, ob es sich um Röhren mit oder ohne Matrixstreifen handelt.

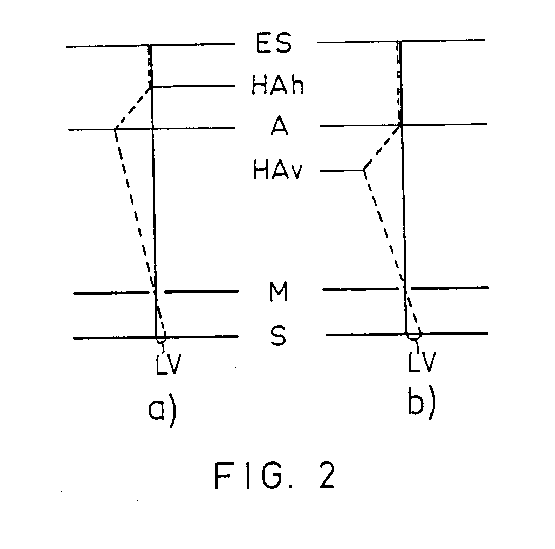

Fig. 2 veranschaulicht, wie mit Hilfe des Hilfsablenkers 23 die Landung von Elektronenstrahlen auf dem Bildschirm verändert werden kann. In den Fig. 2A und B sind jeweils zwei Elektronenstrahlen eingezeichnet, nämlich ein erster als durchgezogene, gerade Linie und ein zweiter als gestrichelte, abgeknickte Linie. Aus den beiden Diagrammen ist unmittelbar ersichtlich, daß eine Landungsverschiebung LV entweder mit Hilfe eines Hilfsablenkers erzielt werden kann, dessen Hilfsablenkebene HAh hinter der Hauptablenkebene A des Ablenkers 15 angeordnet ist, oder mit einem solchen, dessen Ablenkebene HAv vor der Hauptablenkebene A angeordnet ist, jeweils gesehen in Blickrichtung auf den Bildschirm der Röhre 16. Ein hinter dem Ablenker 15 angeordneter Hilfsablenker 23 kann den Elektronenstrahl mit größerer Genauigkeit und bei geringerem baulichem Aufwand verstellen als ein vor dem Ablenker 15 angeordneter Hilfsablenker, jedoch kann in der Praxis doch einem vor dem Ablenker 15 angeordneten Hilfsablenker der Vorzug gegeben werden, wenn nämlich der gesamte Raum hinter dem Ablenker 15 um den Röhrenhals herum von einer Magnetisiereinrichtung beansprucht wird, die einen Magnetring am Elektronenstrahlerzeugungssystem oder gar zwei solcher Magnetringe magnetisiert, wobei die Magnetisierungsströme z. B. auf Grundlage der mit der erfindungsgemäßen Vorrichtung erzielten Meßergebnisse für die Landung bestimmt werden.

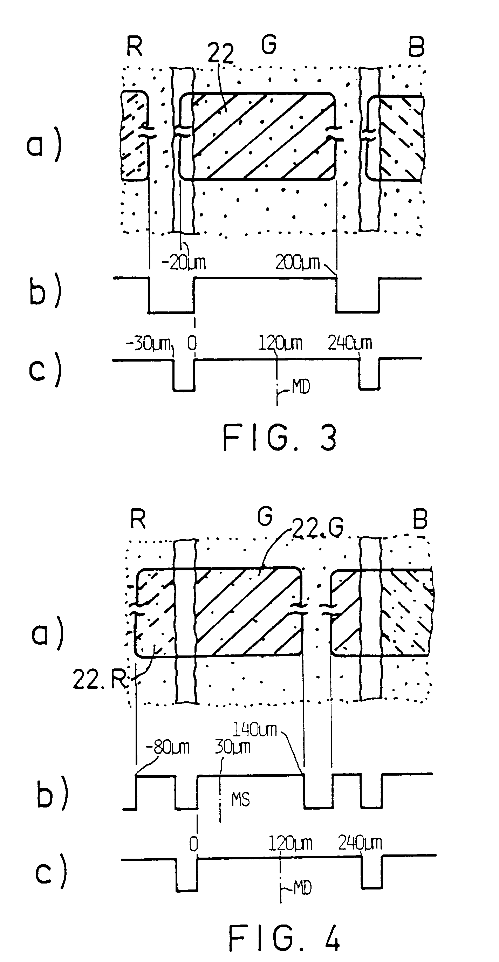

Die Fig. 3 und 4 veranschaulichen, wie in dem Fall einer Landung gemäß Fig. 15 mit der Vorrichtung gemäß Fig. 1 eine zuverlässige Landungsmessung erzielt werden kann. Fig. 3A entspricht hierbei Fig. 15. Fig. 3C zeigt das Meßergebnis für die Lagebestimmung der Außenkanten des Leuchtstoffstreifens G, entsprechend wie anhand von Fig. 14A, B erläutert. Die linke Leuchtstoffstreifenkante wird wieder auf den Wert Null gesetzt. Die rechte Leuchtstoffstreifenkante liegt dann bei 240 µm und die Leuchtstoffmittellinie MD bei 120 µm. Fig. 3B veranschaulicht, daß die linke Leuchtfleckkante mit der linken Leuchtstreifenkante zusammenfällt. Dies, weil die Elektronenfleckkante noch weiter links liegt, nämlich bei der x-Koordinate minus 20 µm, was allerdings nicht erkennbar ist. Der rechte Elektronenfleck- und damit auch Leuchtfleckaußenrand liegt bei 200 µm.

In der Darstellung gemäß Fig. 4A ist der Elektronenfleck so weit verschoben, daß er nun zwei Teilleuchtflecke 22.R und 22.G auf benachbarten Leuchtstoffstreifen erzeugt. Die Verschiebung ist in solcher Weise erfolgt, daß beide Außenränder des Elektronenflecks mit Sicherheit innerhalb benachbarter Leuchtstoffstreifen liegen. Gemäß Fig. 3C beträgt die Separation zwischen benachbarten Leuchtstoffstreifen 30 µm. Erkennt man gemäß Fig. 3, daß die linken Außenränder eines Leuchtstoffstreifens und eines Leuchtflecks zusammenfallen, ist unklar, wo der linke Außenrand des Elektronenflecks liegt, weswegen angenommen wird, die beiden Außenränder würden gerade zusammenfallen. Dann muß ein Ablenkstrom durch den Hilfsablenker 23 eingestellt werden, der mit Sicherheit ausreicht, die Separation von 30 µm zu überbrücken und den linken Außenrand so weit in den links benachbarten Leuchtstoffstreifen hineinzuverschieben, daß eine sichere Messung möglich ist. Wenn mit relativ geringen Hilfsablenkströmen ausgekommen werden soll, kann auch so vorgegangen werden, daß mit Hilfe des sichtbaren rechten Leuchtfleckaußenrands und der in etwa bekannten Breite des Elektronenflecks abgeschätzt wird, wo der linke Elektronenfleckaußenrand mit großer Wahrscheinlichkeit liegt. Wird dabei erkannt, daß dieser linke Elektronenfleck-Außenrand bereits sehr nahe am rechten Außenrand des links benachbarten Leuchtstoffstreifens liegt, kann ein relativ geringer Hilfsablenkstrom verwendet werden, um den linken Elektronenfleckaußenrand sicher in den links benachbarten Leuchtstoffstreifen zu schieben.

Durch die Messungen gemäß Fig. 4B wird festgestellt, daß der Leuchtfleck 140 µm - (- 80 µm) = 220 µm breit ist und daß sein rechter Außenrand um 220 µm - 140 µm = 60 µm nach links verschoben wurde. Damit steht fest, daß die aktuelle Leuchtfleckmittellinie MS bei 30 µm liegt und daß sie im unverschobenen Zustand gemäß Fig. 3 um 60 µm weiter rechts, also bei 90 µm lag. Der Landungsfehler, also der Unterschied zur Leuchtstoffstreifenmittellinie MD beträgt damit 120 µm - 90 µm = 30 µm.

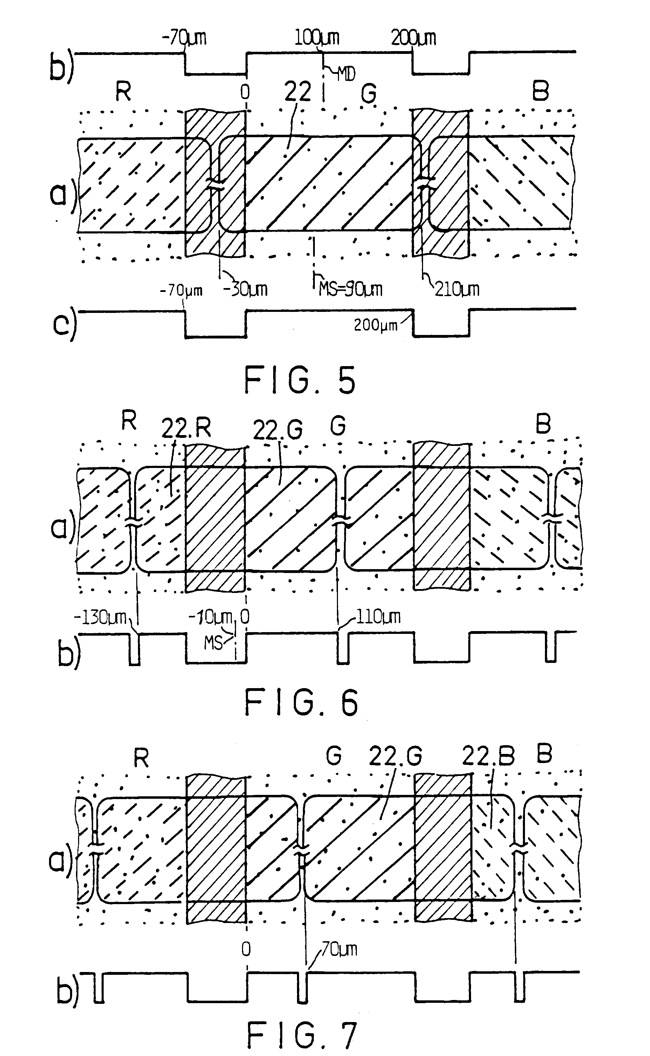

Während die Fig. 3 und 4 zum Veranschaulichen eines Falles dienten, bei dem nur einer der beiden Außenränder eines Elektronenflecks zunächst nicht erkennbar ist, betreffen die Fig. 5 bis 7 den Fall, gemäß dem beide Außenränder nicht erkennbar sind, solange der Elektronenfleck nicht verschoben wird. Gemäß den Fig. 5A und C sind Leuchtstoffstreifen von 200 µm Breite vorhanden, die durch Matrixstreifen von 70 µm Breite voneinander getrennt werden. Zunächst fallen beide Leuchtfleckaußenränder mit den Außenrändern des Leuchtstoffstreifens G zusammen.

Im Fall von Fig. 6 sind alle Elektronenflecke so weit nach links verschoben, daß die beiden Außenränder des betrachteten mittleren Elektronenflecks mit Sicherheit durch zugehörige Außenränder eines Leuchtflecks erkennbar sind, wobei diese Außenränder auf den benachbarten Leuchtstreifen R bzw. G liegen. Für den linken Außenrand wird die Koordinate - 130 µm gemessen, wiederum bezogen auf den linken Außenrand des Leuchtstoffstreifens G, während für den rechten Rand die Koordinate 110 µm gemessen wird. Der Leuchtfleck ist also 240 µm breit, und seine vertikale Mittellinie liegt bei - 10 µm. Die gesammelten Daten reichen jedoch noch nicht aus, um bestimmen zu können, wie weit diese Mittellinie MS nach links verschoben wurde, um hieraus ihre ursprüngliche Lage zurückrechnen zu können.

Die Verschiebung der Mittellinie MS gegenüber der Ausgangslage wäre dann bekannt, wenn von Röhre zu Röhre immer dieselbe Verschiebung der Elektronenflecke bei Einstellung des jeweils gleichen Stroms durch den Hilfsablenker 23 erzielt würde. Nun ist es jedoch so, daß die relative Lage zwischen Elektronenstrahlerzeugungssystem 14, Ablenker 15 und Hilfsablenker 23 von Röhre zu Röhre variiert, was zur Folge hat, daß der Zusammenhang zwischen dem Strom durch den Hilfsablenker 23 und der Strahlverschiebung mit einem Voraussagefehler von bis zu etwa 50 % behaftet ist. Um diesem Mangel abzuhelfen, wird bei der hier beschriebenen Ausführungsform die Beziehung zwischen Strom durch den Hilfsablenker 23 und Leuchtfleckverschiebung kalibriert. Dazu wird der betrachtete Elektronenfleck nach dem Verschieben nach links, wie in Fig. 6 dargestellt, nach rechts verschoben, was das Bild gemäß Fig. 7 mit zwei Teilleuchtflecken 22.G und 22.B ergibt. Die linke Leuchtfleckkante liegt nun bei 70 µm, was einer Verschiebung um 200 µm gegenüber der Lage von Fig. 6 entspricht. Beim Ausführungsbeispiel war für eine Verschiebung von 200 µm ein Unterschied im Strom durch den Hilfsablenker 23 von 600 mA erforderlich, wobei für die erste Verschiebung nach links ein Strom von + 399 mA und für die zweite Verschiebung ein Strom von - 300 mA eingestellt wurde. Aus der Verschiebung von 200 µm nach rechts durch einen Stromunterschied von - 600 mA ergibt sich, daß durch den Strom von 300 mA im ersten Schritt eine Verschiebung um 100 µm erfolgte. Für den Leuchtfleck in der nach links verschobenen Lage wurde die Mittellinie MS an der x-Koordinate - 10 µm festgestellt. Diese Mittellinie lag zunächst um 100 µm weiter rechts, also bei 90 µm. Damit liegt der Landungsfehler, bezogen auf die bei der x-Koordinate 100 µm liegende Mittellinie MD des Leuchtstoffstreifens G bei 10 µm (genau bei - 10 µm, also nach links verschoben).

Die Leuchtflecke in den Fig. 6 und 7 sind so gelegt, daß in beiden Fällen beide Außenränder eines betrachteten Leuchtflecks erkennbar sind. Es reicht jedoch aus, wenn nur in einem der beiden Fälle beide Außenränder erkennbar sind. Es wird dann aus demjenigen Bild, in dem beide Außenränder erkennbar sind, die Breite und damit die Lage der Mittellinie MS bestimmt, während durch die Verschiebung des in beiden Bildern erkennbaren Außenrandes die genannte Kalibrierung und damit die Umrechnung in die ursprüngliche Lage der Mittellinie MS erfolgt.

Sind nach beiden Verschiebungen beide Außenränder erkennbar, also wie in den Fig. 6 und 7 dargestellt, muß nicht sogleich nach dem Ausmessen des Bildes von Fig. 6 die Mittellinie MS des betrachteten Leuchtflecks bestimmt werden, sondern es können mit Hilfe der Bilder der Fig. 6 und 7 auch die ursprünglichen Lagen der Außenränder des begutachteten Elektronenflecks berechnet werden, und mit Hilfe dieser Außenränder wird die Mittellinie MS des Elektronenflecks ermittelt.

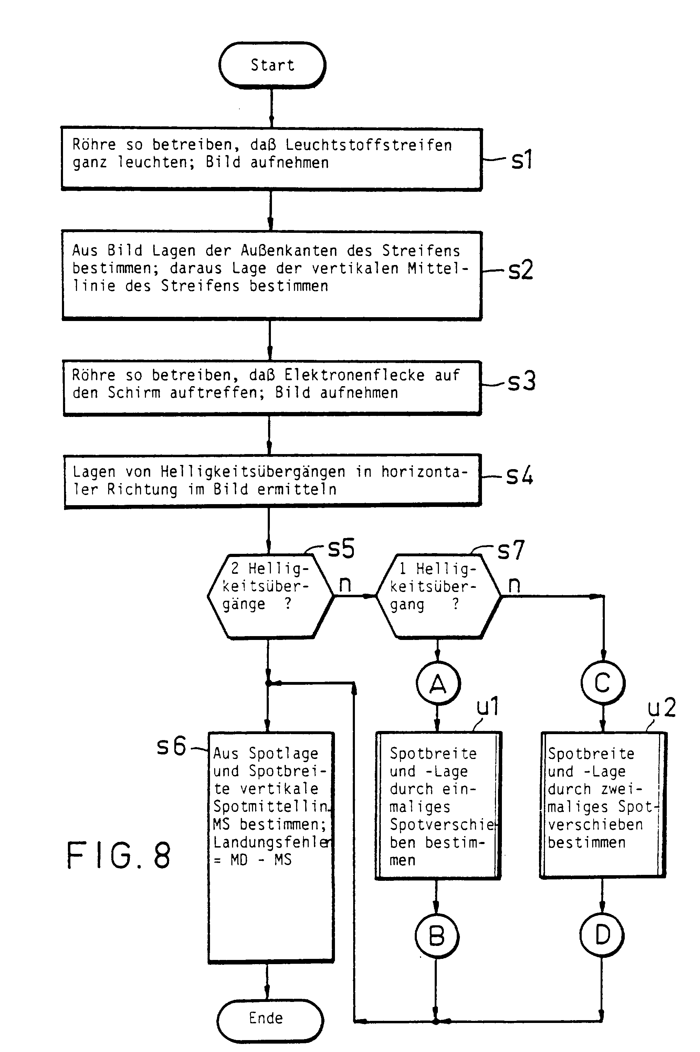

Fig. 8 veranschaulicht einen Ablauf, wie er vorzugsweise von der Vorrichtung gemäß Fig. 1 ausgeführt wird, um auf möglichst schnelle Weise die Landung in allen bisher besprochenen Fällen feststellen zu können, also demjenigen gemäß Fig. 13A, wo von Anfang an beide Außenränder eines Elektronenflecks erkennbar sind, demjenigen gemäß Fig. 3A, wo nur ein Außenrand erkennbar ist, und demjenigen von Fig. 5A, wo anfangs kein Außenrand erscheint.

In Schritt s1 des Flußdiagramms von Fig. 8 wird die Röhre so betrieben, daß Leuchtstoffstreifen ganz leuchten, und es wird das zugehörige Bild aufgenommen, wie es in Fig. 14A dargestellt ist. Aus dem Bild werden die Lagen der Außenkanten eines Leuchtstoffstreifens bestimmt, woraus die Lage der vertikalen Mittellinie MD des Streifens folgt (Schritt s2), wie durch Fig. 14B veranschaulicht. Es folgen nun Schritte zum Bestimmen der Lage eines Elektronenflecks. Hierzu wird die Röhre so betrieben (Schritt s3), daß Elektronenflecke auf dem Bildschirm auftreffen, und ein zugehöriges Leuchtfleckbild wird aufgenommen. Im Bild werden dann die Lagen horizontaler Helligkeitsübergänge festgestellt (Schritt s4). Ergibt sich, daß zwei Helligkeitsübergänge innerhalb eines Leuchtstreifens liegen, was in einem Schritt s5 festgestellt wird, wird das Verfahren mit einem Schritt s6 beendet, der den Verfahrensablauf beinhaltet, wie er eingangs, gestützt auf Fig. 13, beschrieben wurde. Der Ablauf der Schritte s1 bis s4 und s6 entspricht dem Verfahrensablauf, wie er von der anhand von Fig. 11 beschriebenen Vorrichtung ausgeführt wird.

Ergibt sich in dem neu eingefügten Schritt s5, daß keine zwei Helligkeitsübergänge auf einem Leuchtstoffstreifen liegen, wird ein Schritt s7 erreicht, in dem untersucht wird, ob ein Helligkeitsübergang auf dem Streifen liegt. Ist dies der Fall, läuft zwischen Marken A und B ein erstes Unterprogramm u1 ab, während andernfalls, wenn also der Fall gemäß Fig. 5 vorliegt, ein zweites Unterprogramm u2 zwischen Marken C und D abläuft.

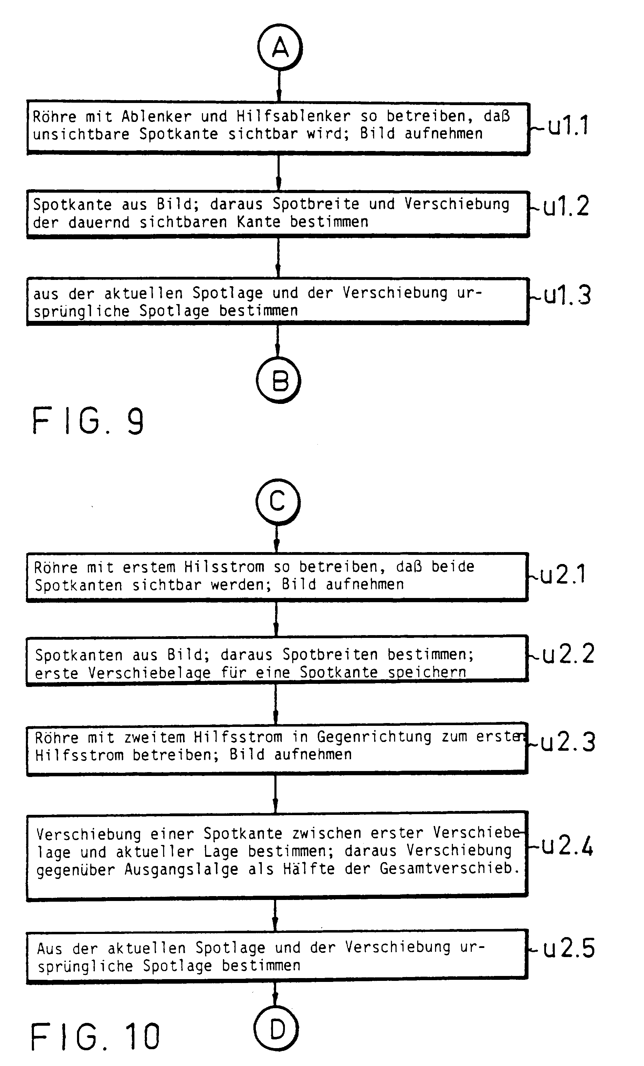

Fig. 9 veranschaulicht das erste Unterprogramm u1, aufgeteilt in drei Einzelschritte u1.1 bis u1.3. Da die Schritte im Flußdiagramm gemäß Fig. 9 ausführlich beschriftet sind und da der Ablauf demjenigen entspricht, wie er oben anhand der Fig. 3 und 4 beschrieben wurde, wird hier die Beschreibung dieses Ablaufs nicht mehr wiederholt.

Fig. 10 zeigt das zweite Unterprogramm u2, aufgeschlüsselt in fünf Einzelschritte u2.1 bis u2.5. Auch hier wird auf die ausführliche Beschriftung des Flußdiagramms verwiesen, das durch die obige Beschreibung zu den Fig. 5 bis 7 unterstützt wird.

Gemäß dem Flußdiagramm von Fig. 8 wird der Ablauf zum Bestimmen der Lage des Elektronenflecks davon abhängig gemacht, wieviele seiner beiden Außenkanten ohne Fleckverschiebung erkennbar sind. Es kann aber auch so vorgegangen werden, daß grundsätzlich der Verfahrensablauf gemäß dem zweiten Unterprogramm u2 erfolgt, also dem Ablauf, wie er selbst dann bei einem zuverlässigen Ergebnis führt, wenn ursprünglich keine Elektronenfleck-Außenkante erkennbar ist. Es entfällt dann die Notwendigkeit von Fallunterscheidungen, jedoch wird auch dann der aufwendigste Ablauf vollzogen, wenn dies eigentlich nicht erforderlich wäre.

## Patentansprüche

1. Verfahren zur Messung der Landung eines Elektronenstrahls, der in einer Mehrstrahl-Farbbildröhre durch einen Schlitz in einer Schattenmaske auf einen Leuchtstoffstreifen auf den Bildschirm der Röhre trifft, mit folgenden Schritten:
a) Anregen zumindest desjenigen Leuchtstoffstreifens zu Lumineszenz, auf dem die Landung gemessen werden soll;
b) Aufnehmen des Bildes des leuchtenden Streifens mit einem Bildwandler;
c) Auswerten des im Bildwandler erzeugten elektrischen Ladungsmusters dahingehend, daß festgestellt wird, entlang welcher Kanten relativ zu den Außenrändern des Bildwandlers übergänge in den Ladungsmengen liegen, wodurch die Außenränder des Leuchtstoffstreifens bestimmt werden;
d) Betreiben der Röhre so, daß der genannte Elektronenstrahl einen Leuchtfleck auf dem genannten Leuchtstoffstreifen erzeugen soll;
e) Aufnehmen des Bildes des tatsächlich erzeugten Leuchtflecks;
f) Auswerten des Bildes des Leuchtflecks, um die Lagen von dessen Außenrändern zu bestimmen; und
h) Vergleichen der Lagen der Außenränder des Leuchtstoffstreifens mit den Lagen der Außenränder des Leuchtflecks, um die Landung des Elektronenstrahls zu bestimmen;
**dadurch gekennzeichnet,** daß nach Schritt f) wie folgt weiterverfahren wird:
g) es wird untersucht, ob die Außenränder des Leuchtflecks innerhalb der Außenränder des Leuchtstoffstreifens liegen, und dann,
- wenn diese Bedingung erfüllt ist, wird Schritt h) ausgeführt;
- andernfalls wird mit Hilfe von Strom durch einen Hilfsabein Verschiebe- und Meßablauf ausgeführt, bei dem der den Leuchtfleck erzeugende Elektronenfleck mindestens einmal so verschoben wird, daß seine beiden Außenränder mit Sicherheit erkennbar sind, wobei das jeweilige Leuchtfleckbild aufgenommen und ausgewertet wird, aus welchen Auswertungsdaten die Breite und die Verschiebung des Elektronenflecks und hieraus die ursprünglichen Lagen seiner Außenränder bestimmt werden, woraufhin Schritt h) ausgeführt wird.

2. Verfahren nach Anspruch 1, **dadurch gekennzeichnet**, daß der Verschiebeablauf folgende Schritte aufweist:
g1) der Elektronenfleck wird durch einen ersten Strom durch den Hilfsablenker so verschoben, daß mit Sicherheit seine beiden Außenkanten erkennbar sind, das Bild dieses Elektronenflecks wird aufgenommen und dahingehend ausgewertet, daß aus den Lagen der Außenkanten die Breite des Elektronenflecks bestimmt wird, welcher Wert abgespeichert wird;
g2) der Wert des ersten Stroms und die Werte, die die Lagen der beiden Außenkanten des Elektronenflecks kennzeichnen, werden abgespeichert;
g3) der Elektronenfleck wird durch einen zweiten Strom durch den Hilfsablenker in Gegenrichtung so weit verschoben, daß zumindest eine seiner beiden Außenkanten mit Sicherheit erkennbar ist, das Bild dieses Elektronenflecks wird aufgenommen und dahingehend ausgewertet, daß die Verschiebung der in den Schritten g1) und g3) erkennbaren Außenkante bestimmt wird;
g4) mit Hilfe dieser Verschiebung und der Differenz zwischen dem ersten und dem zweiten Strom wird die ursprüngliche, bei fehlendem Strom durch den Hilfsablenker nicht verschobene Lage der in den Schritten g1) und g3) erkennbaren Außenkante bestimmt; und
g5) mit Hilfe der Lage dieser Außenkante und der Breite des Elektronenflecks wird Schritt h) ausgeführt.

3. Verfahren nach Anspruch 1, **dadurch gekennzeichnet**, daß beim Verschiebeablauf überprüft wird, ob ein Außenrand des Leuchtflecks innerhalb der Außenränder des Leuchtstoffstreifens liegt, und dann, wenn
- dies nicht der Fall ist, die Schritte g1) bis g5) von Anspruch 2 ausgeführt werden;
- andernfalls der den Leuchtfleck erzeugende Elektronenfleck so weit verschoben wird, daß mit Sicherheit seine beiden Außenkanten auf benachbarten Leuchtstoffstreifen erkennbar sind, das Bild dieses Leuchtflecks vom Bildwandler aufgenommen und in bezug auf die Lagen der genannten Leuchtfleckaußenkanten ausgewertet wird, wodurch die Breite des Elektronenflecks und seine Verschiebung gegenüber der Ursprungslage festliegen, aus welchen Daten die Lage der anfangs nicht erkennbaren Außenkante bestimmt wird, mit welchen Daten dann die Auswertung gemäß Schritt h) erfolgt.

4. Vorrichtung zur Messung der Landung des Elektronenstrahls, der in einer Mehrstrahl-Farbbildröhre (16) durch einen Schlitz in einer Schattenmaske auf einen Leuchtstoffstreifen g) auf den Bildschirm der Röhre trifft, mit:
- einer Bildwandlereinrichtung (12);
- einer Röhrenansteuerung (10);
- einer Auswerteeinrichtung (11); und
- einer Ablaufsteuerung (13);
- wobei die Ablaufsteuerung und die Auswerteeinrichtung so ausgebildet sind, daß sie die Schritte a) bis h) von Anspruch 1 ausführen.

## Claims

1. Method of measuring the landing of an electron beam which, in a multiple-beam colour picture tube, strikes a phosphor strip on the picture screen of the tube through a slit in a shadow mask, comprising the following steps:
a) excitation to luminescence of at least that phosphor strip on which the landing is to be measured;
b) recording of the image of the luminescing strip with an image converter;
c) evaluation of the electrical charge pattern generated in the image converter so as to determine the edges relative to the outer boundaries of the image converter along which transitions in the amounts of charge are situated, as a result of which the outer boundaries of the phosphor strip are determined;
d) operation of the tube so that the said electron beam should generate a luminous spot on the said phosphor strip;
e) recording of the image of the luminous spot actually generated;
f) evaluation of the image of the luminous spot in order to determine the positions of its outer boundaries; and h) comparison of the positions of the outer boundaries of the phosphor strip with the positions of the outer boundaries of the luminous spot in order to determine the landing of the electron beam;
characterized in that, after step f), the subsequent procedure is as follows:
g) whether the outer boundaries of the luminous spot are situated within the outer boundaries of the phosphor strip is investigated and then
- if this condition is fulfilled, step h) is performed;
- if not, a displacement and measurement sequence is performed with the aid of current through an auxiliary deflector, in which sequence the electron spot generating the luminous spot is displaced at least once so that its two outer boundaries can be detected with certainty, the respective luminous-spot image being recorded and evaluated, from which evaluation data the width and the displacement of the electron spot and, from the latter, the original positions of its outer boundaries are determined, after which step h) is performed.

2. Method according to Claim 1, characterized in that the displacement sequence has the following steps:
g1) the electron spot is displaced by a first current through the auxiliary deflector so that its two outer edges can be detected with certainty, and the image of said electron spot is recorded and evaluated in such a way that the width of the electron spot is determined from the positions of the outer edges, which value is stored;
g2) the value of the first current and the values which characterize the positions of the two outer edges of the electron spot are stored;
g3) the electron spot is displaced by a second current through the auxiliary deflector in the opposite direction to such an extent that at least one of its two outer edges can be detected with certainty, the image of said electron spot is recorded and evaluated in such a way that the displacement of the outer edge which can be detected in steps g1) and g3) is determined;
g4) that original position of the outer edge detectable in steps g1) and g3) which is not displaced in the absence of current through the auxiliary deflector is determined with the aid of said displacement and the difference between the first and the second current; and
g5) step h) is performed with the aid of the position of said outer edge and of the width of the electron spot.

3. Method according to Claim 1, characterized in that whether an outer boundary of the luminous spot is situated inside the outer boundary of the phosphor strip is checked during the displacement sequence, and if
- this is not the case, the steps g1) to g5) of Claim 2 are performed;
- if it is the case, the electron spot generating the luminous spot is displaced to such an extent that its two outer edges can be detected with certainty on adjacent phosphor strips, the image of said luminous spot is recorded by the image converter and is evaluated with reference to the positions of the said luminous-spot outer edges, as a result of which the width of the electron spot and its displacement with respect to the original position are established, from which data the position of the initially undetectable outer edge is determined, with which data the evaluation in accordance with step h) is then performed.

4. Device for measuring the landing of the electron beam which, in a multiple-beam colour picture tube (16) strikes a phosphor strip g) on the picture screen of the tube through a slit in a shadow mask, comprising
- an image converter system (12);
- a tube drive (10);
- an evaluation system (11) ; and
- a sequence control (13);
- the sequence control and the evaluation system being so designed that they perform the steps a) to h) of Claim 1.

## Revendications

1. Procédé de mesure de l'impact d'un faisceau électronique qui, dans un tube image en couleurs à plusieurs faisceaux, traverse une fente dans un masque d'ombre et heurte une bande luminescente sur l'écran du tube, comprenant les étapes suivantes :
a) Excitation jusqu'à luminescence d'au moins la bande luminescente sur laquelle l'impact doit être mesuré ;
b) Prise de vue de la bande lumineuse avec un convertisseur d'image ;
c) Analyse de l'image de charge électrique produite dans le convertisseur d'image en vue de déterminer le long de quels bords par rapport aux bords extérieurs du convertisseur d'image, se trouvent des transitions dans les quantités de charge, les bords extérieurs de la bande luminescente étant ainsi définis ;
d) Activation du tube de telle sorte que le faisceau électronique mentionné doit produire un spot lumineux sur la bande luminescente mentionnée ;
e) Prise de vue du spot lumineux effectivement produit ;
f) Analyse de la prise de vue du spot lumineux pour déterminer les positions de ses bords extérieurs ; et
h) Comparaison des positions des bords extérieurs de la bande luminescente avec les positions des bords extérieurs du spot lumineux pour déterminer l'impact du faisceau électronique ;
**caractérisé** par le fait qu'après l'étape f), on procède de la manière suivante :
g) on examine si les bords extérieurs du spot lumineux se trouvent à l'intérieur des bords extérieurs de la bande luminescente, puis
- si cette condition est remplie, on exécute l'étape h) ;
- dans le cas contraire, on exécute à l'aide d'un courant traversant un déflecteur auxiliaire, une séquence de déplacement et de mesure au cours de laquelle le spot électronique produisant le spot lumineux est déplacé au moins une fois de sorte que ses deux bords extérieurs puissent être discernés avec certitude, une prise de vue du spot lumineux considéré étant effectuée et analysée. la largeur et le déplacement du spot électronique et à partir de là, les positions initiales de ses bords extérieurs étant déterminés à partir de ces valeurs d'analyse, à la suite de quoi on exécute l'étape h).

2. Procédé selon la revendication 1, caractérisé par le fait que la séquence de déplacement comprend les étapes suivantes :
g1) le spot électronique est déplacé par un premier courant traversant le déflecteur auxiliaire de telle manière que ses deux bords extérieurs puissent être discernés avec certitude, une prise de vue de ce spot électronique est effectuée et analysée pour déterminer, à partir des positions des bords extérieurs. la largeur du spot électronique. cette valeur étant mémorisée ;
g2) la valeur du premier courant et les valeurs qui caractérisent les positions des deux bords extérieurs du spot électronique, sont mémorisées ;
g3) le spot électronique est déplacé dans le sens inverse par un deuxième courant traversant le déflecteur auxiliaire jusqu'à ce que au moins l'un de ses deux bords extérieurs puisse être discerné avec certitude, une prise de vue de ce spot électronique est effectuée et analysée pour déterminer le déplacement du bord extérieur visible aux étapes g1) et g3);
g4) à l'aide de ce déplacement et de la différence entre le premier et le second courants, on détermine la position initiale, non déplacée en l'absence d'un courant traversant le déflecteur auxiliaire, du bord extérieur visible aux étapes g1) et g3) ; et
g5) l'étape h) est exécutée à l'aide de la position de ce bord extérieur et de la largeur du spot électronique.

3. Procédé selon la revendication 1, **caractérisé** par le fait que pendant la séquence de déplacement, on examine si un bord extérieur du spot lumineux se trouve à l'intérieur des bords extérieurs de la bande luminescente, et lorsque
- cela n'est pas le cas, on exécute les étapes g1) g5) de la revendication 2 ;
- dans le cas contraire, le spot électronique produisant le spot lumineux est déplacé jusqu'à ce que ses deux bords extérieurs soient visibles avec certitude sur des bandes luminescentes voisines, une prise de vue de ce spot lumineux est effectuée par le convertisseur d'image et est analysée par rapport aux positions des bords extérieurs mentionnés du spot lumineux, la largeur du spot électronique et son déplacement par rapport à la position initiale étant ainsi définis, la position du bord extérieur qui n'était pas visible initialement étant déterminée à partir de ces données et l'analyse suivant l'étape h) étant ensuite exécutée avec ces données.

4. Dispositif pour mesurer l'impact du faisceau électronique qui, dans un tube image en couleurs à plusieurs faisceaux (16), traverse une fente dans un masque d'ombre et heurte une bande luminescente (g) sur l'écran du tube, comprenant :
- un dispositif à convertisseur d'image (12) ;
- une dispositif d'excitation de tube (10);
- un dispositif d'analyse (11) ; et
- une commande séquentielle (13) ;
- la commande séquentielle et le dispositif d'analyse étant réalisés de telle sorte qu'ils exécutent les étapes a) h) de la revendication 1.
